# EUROPEAN PATENT SPECIFICATION

(11) **EP 2 976 420 B1**
(45) Date of publication and mention of the grant of the patent: **13.02.2019**
(21) Application number: 14724125.1
(22) Date of filing: 21.03.2014
(51) Int. Cl.: C12M 1/02, C12C 3/08

(54) **NOVEL AGENTS AND USES AND METHODS FOR THE PREPARATION THEREOF**
NEUARTIGE MITTEL UND VERWENDUNGEN UND VERFAHREN ZUR HERSTELLUNG DAVON
NOUVEAUX AGENTS, LEURS UTILISATIONS ET PROCÉDÉS DE PRÉPARATION

(30) Priority: 22.03.2013 GB 201305297
(43) Date of publication of application: 27.01.2016
(73) Proprietor: Barth-Haas UK Limited, Paddock Wood, Kent TN12 6DQ (GB)
(72) Inventor: COOK, David, Nottingham Nottinghamshire NG7 2RD (GB); LINFORTH, Robert, Nottingham Nottinghamshire NG7 2RD (GB)
(74) Representative: HGF Limited
(86) International application number: PCT/GB2014/050886
(87) International publication number: WO 2014/147411

(56) References cited:
- CH-A- 490 813
- US-A1- 2009 169 691
- ITO U: "The mechanisms of flocculation of flocculent yeast during the wort fermentation III The Action of tannin-protein complex in wort to accelerate the yeast flocculation, and the mechanism of yeast flocculation during the wort fermentation", MEMOIRS OF THE COLLEGE OF SCIENCE, UNIVERSITY OF KYOTO, SERIES A,, vol. 31, no. 2, 1 January 1967 (1967-01-01), pages 127-135, XP003022714,
- TIAN YAN ET AL: "Application of persimmon tannin in the clarification of beer", XIAN DAI SHI PIN KE JI = MODERN FOOD SCIENCE AND TECHNOLOGY, HUANAN LIGONG DAXUE,SOUTH CHINA UNVERSITY OF TECHNOLOGY, CN, vol. 27, no. 3, 1 January 2011 (2011-01-01), pages 313-316, XP008170144, ISSN: 1673-9078
- POINSAUT P ET AL: "Les tanins: synergies entre trains des raisins et tanins oenologiques. [Tannins: synergy between grape tannins and winemaking tannin additives]", REVUE DES OENOLOGUES ET DES TECHNIQUES VITIVINICOLES ETOENOLOGIQUES, MACON, no. 93, 1 January 1999 (1999-01-01), pages 11-12, XP008170142, ISSN: 0760-9868
- KNORR ET AL: "Hopfen- und Malzgerbstoffe im Brauproze - [Tannins in hops and malt during the brewing process.]", DER BRAUEREITECHNIKER, GRÄFELFING : DT. BRAUWIRTSCHAFT, DE, vol. 24, no. 6/7, 1 January 1972 (1972-01-01), pages 42-45, XP008170127, ISSN: 0172-5467
- Fritz Knorr: "Über Polyphenole im Brauprozess", Zeitschrift für Lebensmittel- Untersuchung und -Forschung, 1 January 1978 (1978-01-01), pages 228-233, XP055125050, Retrieved from the Internet: URL:http://download.springer.com/static/pd f/160/art%3A10.1007%2FBF01126549.pdf?auth6 6=1403853364_0cfa00a764e5adb08137b4783afc6 a5d&ext=.pdf [retrieved on 2014-06-25]
- KURUMATANI M ET AL: "Analysis of Polyphenols from Hop Bract Region Using CCC", JOURNAL OF LIQUID CHROMATOGRAPHY AND RELATED TECHNOLOGIES, MONTICELLO, NY, US, vol. 28, no. 12/13, 1 January 2005 (2005-01-01), pages 1971-1983, XP003017066, ISSN: 1082-6076, DOI: 10.1081/JLC-200063640

## Description

### Field of the Invention

The present invention relates to agents and methods for fining beverages, and in particular for flocculating yeast, or the removal of chill haze, or both. We describe methods for the preparation of such agents

### Introduction

In the food and beverages industry, during the production of certain beverages it is normal for manufacturers to include a step of clarifying the product. The process of clarifying, or fining, beverages is important for producing beverages with improved appearance and consumer approval.

The problem is particularly relevant to the brewing and wine manufacturing industries. During the production of brewed beverages, several ingredients can result in a turbid product which is unacceptable to consumers. Proteins, polyphenols and suspended yeast can all result in a hazed product, and the aim of the fining process is to remove enough of those ingredients to provide a clear product.

Several agents, or finings, are available for the clarification of brewed products. Various seaweed derived products, such as Irish Moss and carrageenan are effective for the removal of proteins by coagulation and precipitation. Polyphenols can be removed using gelatin and polyvinylpolypyrrolidone (PVPP).

The removal of suspended yeast presents a problem. Cask ales, in particular, are prone to turbidity due to the presence of suspended yeast, although the problem is not limited to cask ales. In order to remove the yeast to clarify the beer it is necessary to flocculate the yeast to allow it to settle into a sediment that can be removed from the product. Fining agents also therefore include yeast flocculating agents.

A commonly used yeast flocculating agent in the brewing industry is isinglass. Isinglass is a collagen product obtained from the swim bladder of fish. Although isinglass is an effective fining agent and yeast flocculating agent, its origin is a matter of some controversy amongst consumers, who may find the use of fish swim bladders distasteful. Vegetarian and vegan consumers do not consider products containing isinglass suitable for their dietary requirements. The question of whether the use of isinglass can render an otherwise kosher product non-kosher is also a debatable point. The use of isinglass therefore limits the acceptability of products and an alternative fining agent, preferably which is able to flocculate yeast, that is economical and easy to produce, and which overcomes these and other disadvantages of the prior art available fining and flocculating agents is required.
ITO (Memoirs of the College of Science, University of Kyoto, Series A, Vol XXXI, No 2, Article 6, 1967 [XP003022714]) discloses yeast flocculating effects of hop tannins and malt tannins.
US 2009/0169691 describes enhancement of the flocculating effect of pectin by ethanol and CO₂ extracts of hops, through to be attributable isohumulones in the extracts.

### Summary of the Invention

In its broadest sense, the present invention provides the use as a fining agent or yeast flocculating preparation of an extract of hops wherein the extract is prepared by a step of extracting hops with a mixed solvent of an organic solvent and water; and a step of solvent removal after the extraction.

Herewith described is a fining agent and/or yeast flocculating agent. The fining agent may display yeast flocculating activity. In particular, the invention provides a fining agent that does not require the use of fish swim bladders for its production. The agent is produced from hops and is, surprisingly, therefore readily derivable from the brewing process itself. The agent therefore has the advantage of enhanced acceptability since it may be seen as a natural ingredient in products requiring fining. The disclosure further provides methods of providing the fining agent, and uses of the fining agent for flocculating yeast and removing haze from a beverage. Methods of fining, including flocculating yeast, are also described.

Preferably, the hops are whole hops, solvent-extracted hops, or spent hops from a brewing process.

In some embodiments the hops used are previously extracted hops. These may have been extracted using a solvent, such as an alcohol, or using CO₂. These previously extracted hops are therefore a waste product derived from the preparation of hop extracts for brewing purposes, these hops may be referred to as spent hops. In some embodiments hop cones are used for the extraction. Any of the known varieties of hops used in the brewing industry may be used.

Preferably, the organic solvent is present in the mixed solvent in an amount of about 10% v/v or more, preferably 20% v/v or more, more preferably 30% v/v or more.

Preferably, the organic solvent is present in the mixed solvent in an amount of about 90% v/v or less.

Preferably, the organic solvent comprises acetone or alcohol.

Preferably, the solvent is a mixed solvent comprising acetone and water in an amount of 30-90% v/v acetone, preferably 40-80% v/v acetone, more preferably about 70% v/v; or a mixed solvent comprising alcohol and water in an amount of 10-90%> v/v alcohol, preferably 20-90% v/v alcohol, more preferably about 80% v/v.

Preferably, the alcohol is methanol or ethanol or a mixture thereof.

Preferably, the extraction is carried out at a temperature of about 100°C or below, preferably at about 50°C or below, more preferably at about 30°C or below, even more preferably at about 10°C or below.

The preparation, which may be provided simply by stirring hops in the extraction medium to provide a crude extract, contains the fining agent, which may display yeast flocculating activity. In some processes, the crude extract is further purified or cleaned up using various known extraction methods, including, but not limited to, solid phase extraction (SPE), liquid-liquid extraction, column chromatography, filtration, ultrafiltration, centrifugation, pH adjustment or enzyme treatment.

The extraction process may involve stirring hops, and may further include grinding hops in the chosen extraction medium. In other processes, extraction may be achieved by pumping solvent at various pressures through an extraction cell loaded with hop material.

The preparation may be obtained by further purifying the extract by extraction against various solvents. In some methods, the preparation is purified by extraction with ethyl acetate. In some methods, the hops are pre-extracted with a solvent such as hexane prior to the extraction with the mixed solvent.

The methods may be supplemented by further purification of the fining agent containing preparation, which may display yeast flocculating activity, on one or more solid phase extraction column. Suitably, the preparation can be loaded into one or more of a cyano column, a Sep-Pak C18 column or a Sephadex LH-20 column. The fining agent containing preparation may be eluted from the cyano column in, for example, 30% acetonitrile, or from the Sep-Pak C18 column with methanol, or from LH-20 with acetone/water mixtures.

The invention further provides the use of the preparations of the invention for the fining of samples, and in particular the flocculation of yeast, in need thereof. Preferably, the preparations will be used in the manufacture of brewed beverages to provide clarified products. The preparation may be used alone in such methods or together with any other known fining agent or flocculating agent, for example, but not limited to isinglass, Irish Moss, PVPP and carrageenan.

In another aspect, the invention further provides the use of a proanthocyanidin as a fining agent or yeast flocculent, wherein the proanthocyanidin has a molecular weight of 10 to 150 kDa.

### Detailed Description

Further details of the invention will now be provided together with specific examples showing the production and characterisation of the new fining agent.

### Brief Description of the Figures

Figure 1 shows the effect of varying the amount of hop liquor containing the fining agent on the ability of the preparation to flocculate yeast.
Figure 2 shows a visual inspection of yeast treated with water (a) and with the fining agent displaying yeast flocculent activity of the invention (b).

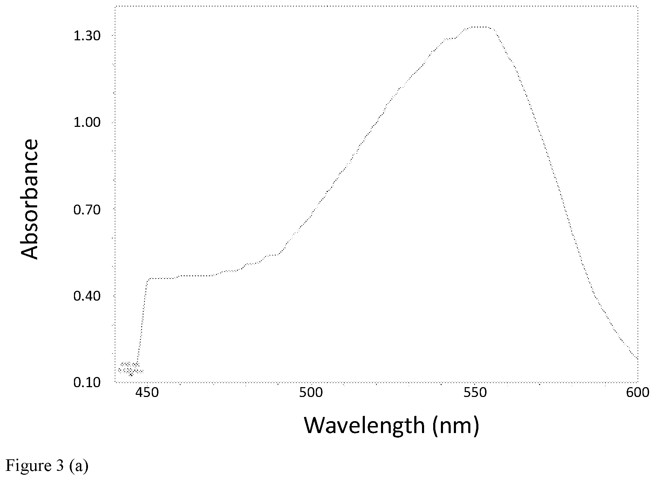

Figure 3 (a) shows the visible spectrum of a sample hydrolysed in butanol HCl for 20min at 100°C. Maxima was at 552nm and the shoulder was at 542nm.

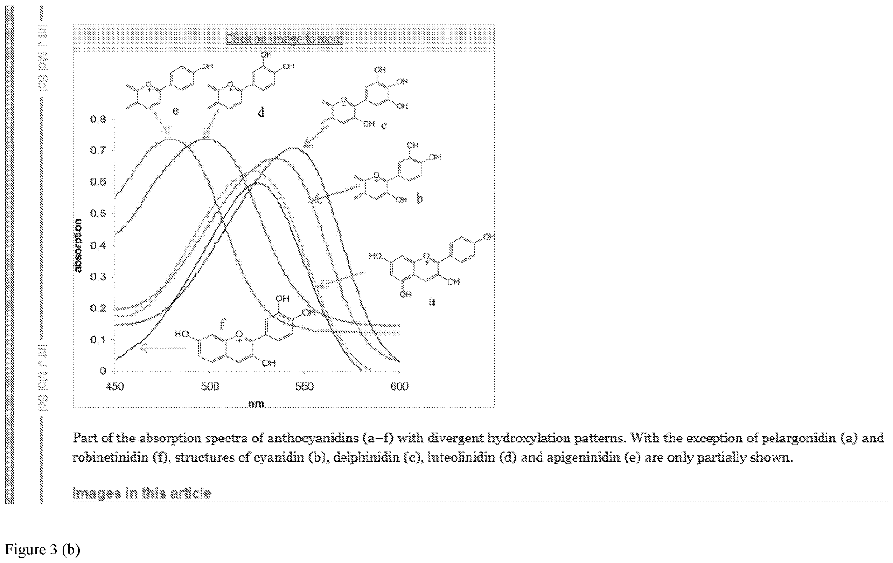

Figure 3 (b) shows, for comparison, part of the absorption spectra for a variety of anthocyanidins, and is taken from *http:*//*www.ncbi.nlm.nih.gov*/*pmc*/*articles*/*PMC2852856*/*.*

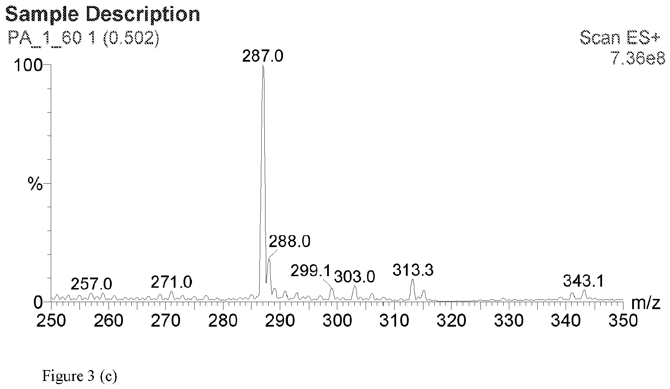

Figure 3 (c) shows the mass spectrum of a sample hydrolysed in butanol HCl for 20min at 100°C. The main ion was at m/z 287.

### Detailed Description

It is shown herein that a preparation extracted from hops, preferably extracted from CO₂ extracted hops, and therefore a waste product of the brewing industry, has potent fining activity, and in particular yeast flocculating activity, and may be used as a fining agent in the preparation of, *inter alia* brewed beverages.

### Extraction of hops

Any variety of hops may be used as the starting material for the production of the preparations of the invention. Hop cones; powdered or pelleted hops or processed hops; spent hop materials or solvent-extracted spent hop material may be used as sources of the fining material. The fining activity, which may include yeast flocculating activity, present in the hops may be extracted very simply and economically by the preparation of a crude extract in water. Alternatively an alcohol or organic solvent based extraction medium may be used. Stirring of hops overnight at room temperature in water provides an extraction medium/preparation with fining activity, which includes yeast flocculating activity. The active agent passes through a 1.2µm filter and may be further purified or cleaned up by a variety of known extraction techniques.

Extraction may be carried out over a period of minutes or hours, for example 0.5 hours, 2 hours, 3 hours, or more and may be carried out overnight, or for up to 24 hours or for longer. Longer extraction times, for example 24 hours or more, do not diminish the activity of the extracts. In some embodiments the extraction is carried out cold, 0°C or just above. In other embodiments the extraction is carried out at or around at room temperature. In other embodiments the extraction is carried out at an elevated temperature, for example at 30, 40, 50 or 60 °C or higher.

Yeast flocculating activity in the extract (hop liquor) can be determined and tracked through the purification, or clean-up process simply, in accordance with Example 2, by measuring the OD of a sample containing suspended yeast. Alternatively, and in accordance with Example 12, the size of the sediment formed may also be used to determine flocculating activity. Flocculation may also be visualised by microscopy as shown in Example 6.

The ability of the extracted agent (hop liquor) to reduce haze in a liquid may be determined by measuring the forward scattering from a liquid at an angle of 90°. The higher the scatter the greater the amount of small particles, typically proteins, and thus haze in the liquid.

In one embodiment, the yeast flocculating activity is extracted in an aqueous mixture of water and an alcohol, such as ethanol or methanol. In some embodiments the activity is extracted from hops in a 10% to 90% (v/v) methanol in water medium. In other embodiments the activity is extracted from hops in a 10% to 90%, preferably about 80%, (v/v) ethanol in water medium.

In some embodiments, the hops are subjected to extraction with aqueous acetone, and the acetone extract contains the fining agent, which preferably displays yeast flocculating activity. Acetone is preferably mixed with water to provide a solution of acetone at about 50 to about 80% v/v. Preferably the extraction medium is about 70% acetone. In one embodiment hop powder is extracted for two hours at ambient temperature in 70% acetone. The sample is filtered, and the acetone removed by rotary evaporation. The sample is adjusted to pH 3.6 and partitioned against 2 volumes of ethyl acetate. The aqueous phase is retained. Following further rotary evaporation to remove ethyl acetate the sample is left to precipitate, and the supernatant contains the active agent. Contaminating species remain in the precipitate.

To further clean up or purify the active agent in the preparation (for both aqueous and organic solvent extracts as described herein), solid phase extraction may be employed. In one example the preparation may be loaded on to C18 SPE cartridges equilibrated with methanol and then water. The sample may be loaded in water and the activity is retained in the cartridge and can be eluted with methanol.

In another embodiment, an extract prepared from hops by any of the methods described herein may be applied to a cyano column, for example a CN 500/3mL cartridge, preconditioned with acetonitrile (ACN) and equilibrated with water. The sample is loaded in water and may be eluted with 20% or 30% ACN. The ACN elution may be employed as a gradient elution against acetic acid, or may be an isocratic elution. In preferred embodiments, the sample is loaded onto the cartridge in acidic conditions, for example at about pH 3.5.

In yet another embodiment, an extract prepared from hops by any of the methods described herein may be applied to an LH-20 Sephadex column in an 80% v/v solution of ethanol. The active agent is eluted with 50% acetone.

In addition to solid phase extraction, extracts prepared from hops by any of the methods described herein may be further cleaned up by extraction against organic solvents, column chromatography, filtration, ultrafiltration, centrifugation, pH adjustment or enzyme treatment. In a preferred embodiment, the extract may be extracted further against ethyl acetate to remove contaminating products.

### Preparations and uses of the hop-derived fining agent

The preparations of the current disclosure are preferably fining agents that are able to flocculate yeast and clarify brewed beverages. It is thought that the principal active agent of the preparations may be a proanthocyanidin because of its behaviour in the various extraction methods described and exemplified herein, and in view of its characterisation detailed in Example 12.

Proanthocyanidins, also known as condensed tannins are polymeric flavonoids. Details of their chemistry and methods for their isolation and handling can be found at *http:*//*www.users.muohio.edu*/*HAGERMAE*/*.* LC-MS analysis of extracts of the invention hydrolysed with butanol/HCL (Example 12) reveals a mass spectrometric profile consistent with the presence of cyanidin and robinetinidin, and the measured visible spectrum of the hydrolysate in butanol/HCl is also characteristic of cyanidin. The visible spectrum showed absorbance around 550nm typical of anthocyanidins, the LC-MS work confirms this and gives the suggestion that it is catechin and/or epicatechin based. Size fractionation suggests that the proanthocyanidins in the preparations of the invention are in a range from 15 to 50 kDa, but could be larger, e.g. up to 150 kDa. The active ingredient of the preparations is soluble in acetone, and in water at acidic to alkaline pH.

In one embodiment, the preparations are used for the clarification of brewed beverages by the flocculation of yeast therein. In other embodiments, the preparations are used for the clarification of brewed beverages by the removal of peptides which have precipitated therein. The preparation can be added to beers without a change in the nature of the beer product (other than the clarification). The product, when added to beer has minimal impact on the taste and aroma of the finished beverage. The preparations can be used alone to clarify brewed beverages or can be used together with one or more known fining agents. For example, the preparation of the invention is used together with isinglass to clarify beer. In another example, the preparation is used together with carrageenan to clarify beer, and in yet another example, the preparation is used together with Irish Moss to clarify beer. Other fining agents and combinations of fining agents that may be used together with the preparations of the invention will be apparent to the skilled person.

The preparation may be supplied in powdered form following concentration and evaporation of an extract prepared according to any of the methods described herein, using a range of evaporative techniques which will be well known to those skilled in the art. The preparation may be compacted or formed into a tablet. In other embodiments, the product may be supplied as a solution in water, ethanol, a water/ethanol mix, acetone or an acetone/water mix, or in a carrier suitable for use in the food and beverage industry, such as propylene glycol.

The invention will now be explained further and more details will be provided in the following Examples, which are not intended to limit the scope of the invention, but merely to illustrate it. The Examples, together with the knowledge of the skilled person will make alternative embodiments apparent to the skilled person.

### EXAMPLES

### Example 1 - Aqueous Extraction (Reference)

300mL of water was added to 10g of Saaz whole-cone hops, and stirred overnight at room temp. Water was decanted off and used as the preparation or extract containing the fining agent, also referred to herein as the "hop liquor". The decanted water was then shown to demonstrate fining activity, for example to flocculate yeast and to remove or reduce haze.

### Example 2 - Assay of flocculation (Reference)

2mL of the liquor (or of a water control) from the extraction of Example 1 was added to 12.4mL of 3 day old green beer - near the end of the main fermentation. The sample was mixed for 15 minutes. The tube caps were removed and the samples left to stand for different amounts of time. The OD of 100 µL of the mixture (removed with a syringe) from 15mm below the meniscus was measured at 600nm after a 10-fold dilution in water.

**Table 1: OD values for control and hop liquor samples**

| **time** | **control 1** | **control 2** | **hop 1** | **hop 2** |
|---|---|---|---|---|
| 10 | 0.79 | 0.83 | 0.51 | 0.33 |
| 20 | 0.85 | 0.88 | 0.45 | 0.35 |
| 30 | 0.84 | 0.89 | 0.37 | 0.40 |
| 45 | 0.92 | 0.84 | 0.34 | 0.33 |
| 60 | 0.80 | 0.76 | 0.41 | 0.39 |

From Table 1 the hop liquor/extract from the hops had a significant effect on flocculation (differences in sediment formation were also observed). Samples could be stood for 15min and analysed for OD to determine activity. Using the wholly aqueous extract (at these levels) it would be necessary to extract about 25g of hops to fine 4.5 litres of green beer.

### Example 3 - Effect of Filtration (Reference)

Samples of hop liquor from Example 1 were filtered through a 1.2µm filter to see if the effect was caused by fragments of hop cone as large aggregates.

Filtered samples gave ODs of 0.5 and 0.41 similar to active fractions and it was concluded that the active material passes though filters.

### Example 4 - Solid Phase Extraction (Reference)

A sample of the hop liquor from Example 1 (8mL) was passed through 2 conditioned and equilibrated (4 mL methanol, then 4 mL water) C18 Strata-x cartridges 200mg/6mL (Phenomenex) in series. This "load" was checked for activity (Table 2).

**Table 2 OD readings for SPE load and water controls**

| **Replicate** | **Control water** | **C18 SPE load** |
|---|---|---|
| 1 | 0.81 | 0.78 |
| 2 | 0.74 | 0.73 |
| 3 | 0.76 | 0.82 |

The optical readings were performed as described in Example 2 with the samples allowed to stand for 15min before OD measurements were made.

The active was retained by the SPE cartridge when loaded in water. Following this attempts were made to recover the active material. In a separate experiment, recovery of the sample from the SPE cartridge was attempted with methanol. A 4mL sample was applied in water, the cartridge was washed with 4mL water and elution was attempted with 4mL methanol. No activity was found in either the wash or elution fractions.

A second style of cartridge was tried (C18 Sep-Pak; Waters). An aliquot (8 mL, pH 7) of the sample/hop liquor (Example 1) was loaded onto an equilibrated and conditioned (methanol/water) Sep-pak C18 plus. The load was orange in colour not turbid, the cartridge was dried under vacuum for 30min and ethyl acetate (25mL) was used to elute a green fraction. This was followed by an elution with 25mL of methanol. Solvents were removed by rotary evaporation and the fractions re-dissolved in water. No flocculation was observed when the load or the ethyl acetate fraction were tested for activity. The active compound was eluted in the methanol fraction. This behaviour is consistent with that of polymeric proanthocyanidins with a high number of sub-units (reference: Methods in polyphenol analysis. Edited by Celestino Santos-Buelga, Gary Williamson. Royal Society of Chemistry 2003).

Retention and recovery of the active from a cyano 500mg/3mL cartridge was tested. The cartridge was conditioned with acetonitrile (ACN), equilibrated with water; the sample was loaded in water and eluted with 30, 70 or 100% ACN. The cartridge was washed after loading with water.

**Table 3: Fining activity of fractions from the CN SPE determined by OD analysis.**

| **Fraction** | **OD1** | **OD2** |
|---|---|---|
| Water load | 0.63 | 0.56 |
| 30 | 0.40 | 0.41 |
| 70 | 0.76 | 0.82 |
| 100 | 0.84 | 0.90 |
| Water control | 0.91 | 0.84 |

The active eluted in 30% acetonitrile. Since pH may affect the recovery/loading of the extract onto the SPE cartridge, extracts were loaded at pH 3.5, 5.5 and 7.5. The extracts were collected as load, 30% and 70% eluted with acetonitrile. Note extract at pH 3.5 left most colour on the cartridge during load, pH 7.5 the least. The recovery results are shown in Table 4.

**Table 4: Recovery from CN SPE at varying pH**

| **pH** | **pH 3.5** | | **pH 5.5** | | **pH 7.5** | |
|---|---|---|---|---|---|---|
| | **OD Rep 1** | **OD Rep 2** | **OD Rep 1** | **OD Rep 2** | **OD Rep 1** | **OD Rep 2** |
| Load | 0.69 | 0.61 | 0.39 | 0.26 | 0.25 | 0.30 |
| 30% ACN | 0.25 | 0.23 | 0.26 | 0.21 | 0.42 | 0.37 |
| 70% ACN | 0.67 | 0.67 | 0.58 | 0.57 | 0.70 | 0.60 |

The active stuck to the cartridge at pH 3.5 in water and eluted in 30% acetonitrile. At higher pH values the active eluted with the load.

More samples were fractionated by SPE using 10% steps of acetonitrile against phosphate buffer on a cyano 500mg/3mL SPE cartridge, and the results are shown in Table 5.

**Table 5: Elution from cyano 500/3mL in ACN against phosphate buffer.**

| **% ACN** | **OD 1** | **OD 2** |
|---|---|---|
| 0 load | 0.66 | 0.54 |
| 10 | 0.63 | 0.59 |
| 20 | 0.39 | 0.46 |
| 30 | 0.60 | 0.57 |
| 40 | 0.65 | 0.60 |
| 50 | 0.55 | 0.57 |
| water control | 0.58 | 0.55 |

The active eluted in the 20% acetonitrile fraction.

### Example 5 - Effect of hop liquor dilution on activity (Reference)

The following experiments were done to determine whether or not dilution affects activity. Samples of 3 day old green beer were mixed with different amounts of the hop liquor of Example 1.

**Table 6: OD readings for samples of beer with different amounts of hop liquor added**

| **Amount added (mL)** | **OD** |
|---|---|
| 2 | 0.4 |
| 2 | 0.38 |
| 1 | 0.36 |
| 0.5 | 0.75 |
| 0.25 | 0.62 |
| 0.125 | 0.90 |
| 0.0 | 0.83 |

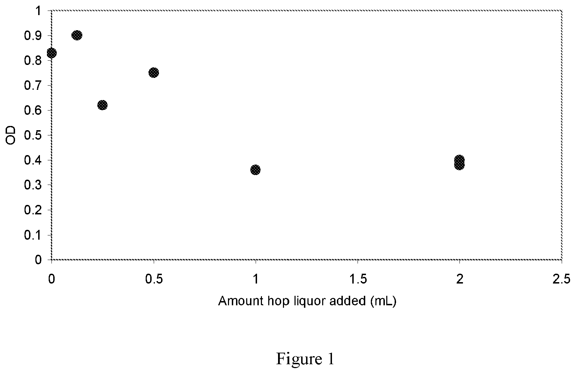

Figure 1 shows a plot of the OD vs. amount of hop liquor added. It can be seen that samples containing 2 mL or 1mL appear to have been flocculated, whilst lower amounts gave weaker responses. This shows that for a wholly aqueous extract around 12.5g of hops would have to be extracted to induce yeast flocculation in 4.5 litres of green beer.

### Example 6 - Evaluation of flocculation by microscopy (Reference)

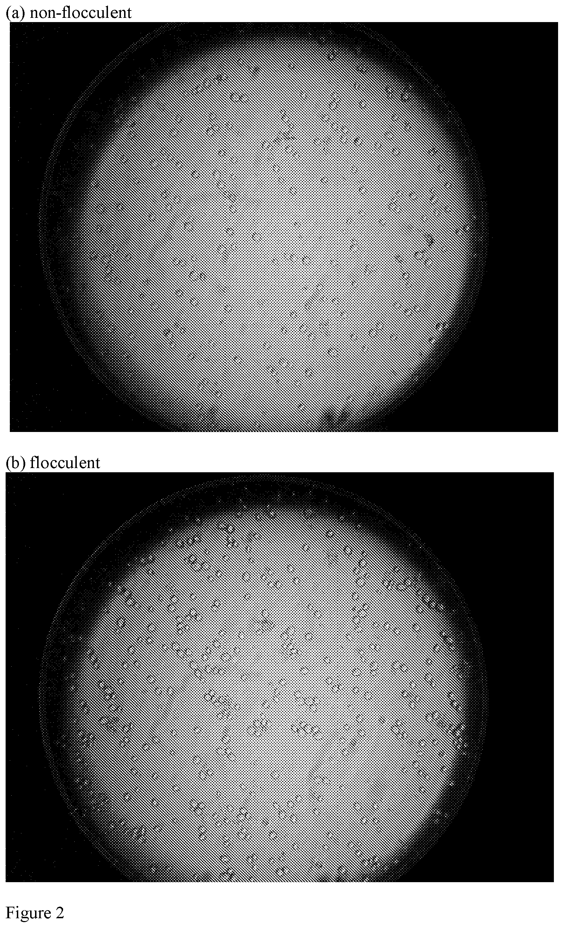

Figure 2 shows a visual inspection of yeast samples treated with the flocculent preparation (hop liquor) of Example 1 or control (water).

### Example 7 - Variations in Extraction methodology

The extraction of Example 1 was varied to show the effect of temperature, grinding and the addition of methanol to the extraction medium.

In each case, the extraction was carried out in static incubators for 4.5 hours. 5g of hops were extracted in 150 mL solvent. Grinding was carried out in solvent using an ultra-turrax high shear mixer at high speed for 2 min. For the methanol water mixture the ratio of methanol:water was 50:50.

Samples were filtered on a Buchner funnel/flask and then syringe filtered (1.2µm), then frozen at -18°C until tested for activity. The samples were assayed using 2mL of the extract.
The results are presented in Table 7. The strongest clarification of the green beer was with the methanol:water mixture.

**Table 7: OD values are means of duplicate values**

| **Run** | **Temp.** | **Ground?** | **Solvent** | **OD (2mL)** |
|---|---|---|---|---|
| 1 | 30 | no | H₂O | 0.28 |
| 2 | 60 | no | H₂O | 0.21 |
| 3 | 60 | yes | H₂O | 0.44 |
| 4 | 30 | yes | MeOH:H₂O | 0.135 |
| 5 | 60 | no | MeOH:H₂O | 0.09 |
| 6 | 30 | yes | H₂O | 0.33 |
| 7 | 30 | no | MeOH:H₂O | 0.205 |
| 8 | 60 | yes | MeOH:H₂O | 0.145 |

### Example 8 - Size fractionation (Reference)

2 x15mL of a hop extract (Example 1) in water were loaded onto two 3kDa fractionation centrifuge units and spun at 35000 for several hours (4h). The >3kDa fraction was retained and then fractionated on a 30kDa fractionation tube. Flocculating activity is shown in Table 8.

**Table 8: Flocculation activity of size fractionated samples**

| **sample** | **Rep 1** | **Rep 2** |
|---|---|---|
| water control | 0.67 | 0.56 |
| <3 kDa | 0.64 | 0.63 |
| >3 and <30 kDa | 0.20 | 0.23 |
| >30k Da | 0.34 | 0.32 |

Activity was detected in both the 3 to 30 and >30 kDa fractions. The flocculent therefore appears to be active at a range of molecular weights including both the 3-30 kDa and >30 kDa ranges.

### Example 9 - Evaluation of different yeast strains (Reference)

Two dried yeasts supplied with home brew kits and 2 commercial lager brewing yeasts were pitched into an Edme IPA kit (2L volumes) fermented for 3 days, racked and used for sedimentation studies. 2mL of a filtered aqueous Saaz extract (Example 1) were combined with 12mL of each beer (2mL of water was added as a control for each fermentation). For these studies the depth of the sediment formed was recorded. The results are shown in Table 9.

**Table 9: Depth of sediment (mm) of yeast settling after treatment of 4 different yeasts with a Saaz hop extract**

| **yeast** | **Saaz Rep 1** | **Saaz Rep 2** | **Water Rep 1** | **Water Rep 2** |
|---|---|---|---|---|
| Lager Brewing yeast 1 | 7 | 6 | 1 | 1 |
| Lager Brewing yeast 2 | 7 | 8 | 0 | 0 |
| YBB (home brew kit 1) | 10 | 10 | 0 | 0 |
| YTB (home brew kit 2) | 10 | 10 | 0 | 0 |

All of the yeasts were sedimented out by the hop-derived agent.

### Example 10 - pH effect on sedimentation (Reference)

The effect of pH was tested by combining 2mL of Saaz extract with 12mL of 3 day old green beer, adjusting the pH and then allowing the samples to mix before standing for 15min and measuring the sediment formed. The results are presented in Table 13.

**Table 10: Sediment formation as a function of pH**

| **pH** | **Sediment depth (mm)** |
|---|---|
| 2.5 | 2 |
| 3.5 | 13 |
| 4.5 | 9 |
| 5.5 | 6 |
| 6.5 | 0 |

The results show that pH is important to the bioassay process, with an optimum at a pH compatible with that of brewed beverages.

### Example 11 - Acetone Extraction

5g of CO₂ extracted hop powder was extracted for 2h at ambient temperature with 100mL of 70% acetone. The sample was filtered, water added, and the acetone was removed from the filtrate by rotary evaporation. The latter was adjusted to pH 3.6, then partitioned against 2 volumes of ethyl acetate which were discarded. This removed a lot of colour and should have removed small phenolic molecules. The aqueous phase was rotary evaporated to remove any residual ethyl acetate. The sample was then left at 6°C for 3h by which time a precipitate had formed. This was removed by centrifugation, 10min at 4000rpm and the supernatant retained. Final extract volume was 50mL.

10mL of the supernatant was added to 1gallon of green beer. This flocculated the yeast which subsequently sedimented. The finished beer fined with the hop preparation appeared similar in appearance and character to one fined with isinglass. The acetone extraction resulted in a more active extract than when using water alone (Example 5). 1g of hops were required to prepare an acetone extract that could fine one gallon of green beer compared with 12.5g of a wholly aqueous extract.

### Example 12 - LC-MS of the anthocyanidins

Figure 7 (a) shows the visible spectrum of a sample (Example 11) hydrolysed in butanol HCl for 20min at 100°C. A maximum was observed at 552nm and the shoulder was at 542nm. These features are consistent with the production of anthocyanidins.

Figure 7 (b) shows, for comparison, part of the absorption spectra for a variety of anthocyanidins, and is taken from http://www.ncbi.nlm.nih.gov/pmc/articles/PMC2852856/.

The extract hydrolysed with butanol/HCl was analysed by direct infusion LC-MS (positive ion mode, infusion rates 10µl/min of the extract at a cone voltage of 60V) which showed one main peak at m/z 287. This would be consistent with cyanidin or robinetinidin which have visible absorption maxima of 535 and 525nm respectively. Cyanidin (from catechin and epicatechin) is more common, robinetinidin is from quebracho tannin extracts.

### Example 13 - Effect on haze

Beverages, and in particular beer, can suffer from a haze or cloudiness which appears when protein-polyphenol complexes partially precipitate in the beverage. The formation of a haze tends to occur when beverages are cooled prior to consumption and is often referred to as a "chill haze". Whilst the product is unaffected in terms of taste, the appearance can be unappealing to the consumer. An extract preparation/hop liquor according to the invention can be used to reduce or prevent haze formation.

The data presented below in Tables 11 and 12 demonstrate that a hop preparation obtained by aqueous alcohol or water extraction (Table 11) or by aqueous acetone or aqueous alcohol extraction (Table 12) of spent hops after solvent extraction is able to reduce the chill haze in beer samples (note that the data in Tables 11 and 12 relate to the fining of different batches of hazy beer).

In the experiments aliquots of the hop preparations and isinglass (positive control) were added to a green beer at 4°C. These were allowed to clear, and residual yeast was removed by centrifugation, the 90° scatter angle (haze) was then determined. The samples were allowed to come to room temperature and the haze re-measured. The difference between these two values is the chill haze. The 90° scatter angle measures the scattering of light due to small particles in suspension. The data presented in Tables 11 and 12 shows that the hop preparations decreased both the haze and the chill haze.

**Table 11: Impact of hop preparations obtained from spent Galena hops following supercritical CO₂ extraction, and a commercial isinglass, on chill haze in beer**

| Fining Agent | Dosage Rate (mL extract / 0.2 L beer) | Haze @ 4°C (H_{4°C}) (in EBC Units) | Haze @ RT (H_{RT}) (in EBC Units) | Chill Haze (H_{4°C}-H_{RT}) (in EBC Units) |
|---|---|---|---|---|
| Unfined Control | - | 0.83 | 0.37 | 0.46 |
| Isinglass (Murphy's Alkleer A) | 0.5 | 0.35 | 0.33 | 0.02 |
| Spent Galena hops extracted into 20% ethanol (aq) | 4.5 | 0.5 | 0.4 | 0.1 |
| Spent Galena hops extracted into water | 3 | 0.61 | 0.4 | 0.21 |

**Table 12: Impact of hop preparations obtained from spent hops after CO₂ extraction, and a commercial isinglass, on chill haze in beer**

| Fining Agent | Optimal Dosage (mL extract / 0.2 L beer) | Haze @ 4°C (H_{4°C}) (in EBC Units) | Haze @ RT (H_{RT}) (in EBC Units) | Chill Haze (H_{4°C}-H_{RT}) (in EBC Units) |
|---|---|---|---|---|
| Unfined Control | - | 2.155 | 0.445 | 1.71 |
| Isinglass (Murphy's Alkleer A) | 4 | 0.54 | 0.2 | 0.34 |
| Mixture of spent hops extracted into 70% acetone (aq) | 4.5 | 0.51 | 0.24 | 0.27 |
| Mixture of spent hops extracted into 20% ethanol (aq) | 6 | 1.31 | 0.43 | 0.88 |

### Example 14: Flocculating activity extracted from whole hop cones of various varieties (Reference)

Samples of whole hops (5g) were extracted overnight on a roller bed in 150mL of water at room temperature before filtration, they were then frozen at -18°C until needed. These extracts were then assayed for flocculation activity by adding 2mL of each extract to 15mL of green beer, mixing and allowing the samples to stand. The OD of the samples was measured from an aliquot of the sample removed from just below the meniscus. Controls (no extract added) showed an OD of around 0.7, lower OD values indicated that yeast were flocculated by the extract. All 4 varieties in table 13 showed flocculation from extracts of whole hops.

**Table 13**

| Hop Variety | OD resulting from 2mL extract addition to 15 mL green beer |
|---|---|
| Saaz | 0.35 |
| Pilgrim | 0.22 |
| Goldings | 0.58 |
| Target "seeded" | 0.45 |

### Example 15: Aqueous extraction of hops at a range of pH values (Reference)

Hops were added to water and the pH of the water/hop slurry was adjusted to a range of pH values using hydrochloric acid or sodium hydroxide. Hop liquor was assayed for flocculation activity based on the amount of extract that was necessary to induce yeast flocculation. As can be seen in Table 14 all of the extracts showed flocculation activity, although this activity was lower at pH 9 than at other pH levels. A lower activity score, indicates less extract was needed to induce flocculation. The optical properties of the extracts were also determined and the extract carried out at pH 3 showed the greatest light transmission indicative of greater clarity. This showed that the extraction of the fining agent can be carried out at a range of pH values.

**Table 14**

| Extraction pH | Activity Score | % Transmission (600 nm) |
|---|---|---|
| 9 | 8 | 58.3 |
| 8 | 4 | 67.3 |
| 7 | 4 | 66.3 |
| 6 | 4 | 65.1 |
| 5 | 4 | 65.1 |
| 4 | 4 | 85.5 |
| 3 | 4 | 89.3 |
| 2 | 4 | 63.3 |

### Example 16: Analysis of extracts of different spent hop samples

Samples of the hop waste following CO₂ extraction, were extracted with 70% acetone to determine if the fining agent was present and to evaluate differences between the samples. Aliquots of the extracts (hop liquor) were added to beer and the amount of extract needed to induce the formation of the same depth of sediment recorded. All of the hop varieties showed flocculation activity (Table 15). A lower activity score, indicates less extract was needed to induce flocculation. Most of the extracts were similar in activity, with Galena producing a more active extract (with respect to fining activities as determined by yeast flocculation) and Magnum a less active extract.

**Table 15**

| Hop Variety | Activity Scores |
|---|---|
| Galena | 0.0625 |
| Summit batch 1* | 0.125 |
| Zeus | 0.125 |
| Target* | 0.0625 |
| Summit batch 2 | 0.125 |
| Hallertau Hallertauer Magnum | 0.25 |
| Hallertau Herkules | 0.125 |
| Hallertau Hallertauer Taurus | 0.125 |

All samples had been previously extracted with supercritical CO₂, apart from: * extracted with liquid (sub-critical) CO₂

## Claims

1. Use as a fining agent or yeast flocculating preparation of an extract of hops wherein the extract is prepared by a step of extracting hops with a mixed solvent of an organic solvent and water; and a step of solvent removal after the extraction.

2. Use as claimed in claim 1, wherein the organic solvent is present in the mixed solvent in an amount of about 10% v/v or more, preferably 20% v/v or more, more preferably 30% v/v or more.

3. Use as claimed in claim 1 or claim 2, wherein the organic solvent is present in the mixed solvent in an amount of about 90% v/v or less.

4. Use as claimed in any preceding claim, wherein the organic solvent comprises acetone or alcohol.

5. Use as claimed in claim 1, wherein the solvent is a mixed solvent comprising acetone and water in an amount of 30-90% v/v acetone, preferably 40-80% v/v acetone, more preferably about 70% v/v.

6. Use as claimed in claim 5, wherein the step of solvent removal comprises removal of acetone.

7. Use as claimed in claim 1, wherein the solvent is a mixed solvent comprising alcohol and water in an amount of 10-90%> v/v alcohol, preferably 20-90% v/v alcohol, more preferably about 80% v/v.

8. Use as claimed in claim 4 or claim 7, wherein the alcohol is methanol or ethanol or a mixture thereof.

9. Use as claimed in any preceding claim, wherein the extraction is carried out at a temperature of about 100°C or below, preferably at about 50°C or below, more preferably at about 30°C or below, even more preferably at about 10°C or below.

10. Use as claimed in any preceding claim, wherein the hops are whole hops, solvent-extracted hops, or spent hops from a brewing process.

11. Use of a proanthocyanidin as a fining agent or yeast flocculent, wherein the proanthocyanidin has a molecular weight of 10 kDa to 150 kDa.

12. Use as claimed in any one of claims 1 to 11 in the production of a food or beverage, preferably wherein the beverage is a beer, lager, ale or wine.

## Patentansprüche

1. Verwendung eines Hopfenextrakts als Klärmittel oder Hefe-Flockungszubereitung, wobei der Extrakt durch einen Schritt einer Extraktion von Hopfen mit einem gemischten Lösungsmittel aus einem organischen Lösungsmittel und Wasser und einen Schritt einer Lösungsmittelentfernung nach der Extraktion zubereitet wird.

2. Verwendung nach Anspruch 1, wobei das organische Lösungsmittel in dem gemischten Lösungsmittel in einer Menge von ungefähr 10 % Vol./Vol. oder mehr, vorzugsweise 20 % Vol./Vol. oder mehr, bevorzugter 30 % Vol./Vol. oder mehr, vorhanden ist.

3. Verwendung nach Anspruch 1 oder Anspruch 2, wobei das organische Lösungsmittel in dem gemischten Lösungsmittel in einer Menge von ungefähr 90 % Vol./Vol. oder weniger vorhanden ist.

4. Verwendung nach einem vorherigen Anspruch, wobei das organische Lösungsmittel Aceton oder Alkohol umfasst.

5. Verwendung nach Anspruch 1, wobei das Lösungsmittel ein gemischtes Lösungsmittel ist, das Aceton und Wasser in einer Menge von 30-90 % Vol./Vol. Aceton, vorzugsweise 40-80 % Vol./Vol. Aceton, bevorzugter ungefähr 70 % Vol./Vol., umfasst.

6. Verwendung nach Anspruch 5, wobei der Schritt einer Lösungsmittelentfernung eine Entfernung von Aceton umfasst.

7. Verwendung nach Anspruch 1, wobei das Lösungsmittel ein gemischtes Lösungsmittel ist, das Alkohol und Wasser in einer Menge von 10-90 %> Vol./Vol. Alkohol, vorzugsweise 20-90 % Vol./Vol. Alkohol, bevorzugter ungefähr 80 % Vol./Vol. umfasst.

8. Verwendung nach Anspruch 4 oder Anspruch 7, wobei der Alkohol Methanol oder Ethanol oder ein Gemisch davon ist.

9. Verwendung nach einem vorherigen Anspruch, wobei die Extraktion bei einer Temperatur von ungefähr 100 °C oder darunter, vorzugsweise bei ungefähr 50 °C oder darunter, bevorzugter bei ungefähr 30 °C oder darunter, noch bevorzugter bei ungefähr 10 °C oder darunter durchgeführt wird.

10. Verwendung nach einem vorherigen Anspruch, wobei der Hopfen ganzer Hopfen, lösungsmittelextrahierter Hopfen oder verbrauchter Hopfen aus einem Brauprozess ist.

11. Verwendung eines Proanthocyanidins als Klärmittel oder Hefe-Flockungsmittel, wobei das Proanthocyanidin ein Molekulargewicht von 10 kDa bis 150 kDa aufweist.

12. Verwendung nach einem der Ansprüche 1 bis 11 bei der Herstellung eines Lebensmittels oder Getränks, vorzugsweise wobei das Getränk ein Bier, helles Bier, obergäriges Bier oder Wein ist.

## Revendications

1. Utilisation comme un agent de clarification ou une préparation de floculation de levure d'un extrait de houblon dans laquelle l'extrait est préparé par une étape d'extraction de houblon avec un solvant mixte d'un solvant organique et d'eau et une étape d'élimination du solvant après l'extraction.

2. Utilisation selon la revendication 1, dans laquelle le solvant organique est présent dans le solvant mixte dans une quantité d'environ 10 % v/v ou plus, préférablement 20 % v/v ou plus, plus préférablement 30 % v/v ou plus.

3. Utilisation selon la revendication 1 ou la revendication 2, dans laquelle le solvant organique est présent dans le solvant mixte dans une quantité d'environ 90 % v/v ou moins.

4. Utilisation selon l'une quelconque des revendications précédentes, dans laquelle le solvant organique comprend de l'acétone ou de l'alcool.

5. Utilisation selon la revendication 1, dans laquelle le solvant est un mélange mixte comprenant de l'acétone et de l'eau dans une quantité de 30 à 90 % v/v d'acétone, préférablement 40 à 80 % v/v d'acétone, plus préférablement environ 70 % v/v.

6. Utilisation selon la revendication 5, dans laquelle l'étape d'élimination du solvant comprend l'élimination de l'acétone.

7. Utilisation selon la revendication 1, dans laquelle le solvant est un solvant mixte comprenant de l'alcool et de l'eau dans une quantité de 10 à 90 % > v/v d'alcool, préférablement de 20 à 90 % v/v d'alcool, plus préférablement environ 80 % v/v.

8. Utilisation selon la revendication 4 ou la revendication 7, dans laquelle l'alcool est le méthanol ou l'éthanol ou un mélange de ceux-ci.

9. Utilisation selon l'une quelconque des revendications précédentes, dans laquelle l'extraction est réalisée à une température d'environ 100 °C ou au-dessous, préférablement à environ 50 °C ou au-dessous, plus préférablement à environ 30 °C ou au-dessous, encore plus préférablement à environ 10 °C ou au-dessous.

10. Utilisation selon l'une quelconque des revendications précédentes, dans laquelle le houblon est du houblon entier, du houblon extrait au solvant, ou du houblon épuisé provenant d'un processus de brasserie.

11. Utilisation d'une proanthocyanidine comme un agent de clarification ou un agent de floculation de levure, dans laquelle la proanthocyanidine a un poids moléculaire de 10 kDa à 150 kDa.

12. Utilisation selon l'une quelconque des revendications 1 à 11 dans la production d'un aliment ou d'une boisson, préférablement dans laquelle la boisson est une bière, une lager, une ale ou un vin.
